(19) Europäisches Patentamt
European Patent Office
Office européen des brevets

(11) EP 4 353 845 B1

(12) **EUROPEAN PATENT SPECIFICATION**

(45) Date of publication and mention of the grant of the patent:
**05.11.2025 Bulletin 2025/45**

(21) Application number: **22819992.3**

(22) Date of filing: **12.05.2022**

(51) International Patent Classification (IPC):
***C21C 7/00*** *(2006.01)* ***C21C 7/072*** *(2006.01)*
***C21C 7/10*** *(2006.01)* ***C21C 7/06*** *(2006.01)*
***C21C 7/064*** *(2006.01)*

(52) Cooperative Patent Classification (CPC):
**C21C 7/10; C21C 7/0006; C21C 7/06; C21C 7/064; C21C 7/0645; C21C 7/072;** Y02P 10/20

(86) International application number:
**PCT/JP2022/020017**

(87) International publication number:
**WO 2022/259808 (15.12.2022 Gazette 2022/50)**

(54) **MOLTEN STEEL DENITRIFICATION METHOD, SIMULTANEOUS DENITRIFICATION AND DESULFURIZATION TREATMENT METHOD, AND STEEL PRODUCTION METHOD**

VERFAHREN ZUR DENITRIFIKATION VON GESCHMOLZENEM STAHL, VERFAHREN ZUR GLEICHZEITIGEN DENITRIFIKATION UND ENTSCHWEFELUNGSBEHANDLUNG SOWIE STAHLHERSTELLUNGSVERFAHREN

PROCÉDÉ DE DÉNITRIFICATION D’ACIER EN FUSION, PROCÉDÉ DE TRAITEMENT DE DÉNITRIFICATION ET DE DÉSULFURATION SIMULTANÉES ET PROCÉDÉ DE PRODUCTION D’ACIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.06.2021 JP 2021098151**

(43) Date of publication of application:
**17.04.2024 Bulletin 2024/16**

(73) Proprietor: **JFE Steel Corporation**
**Tokyo 100-0011 (JP)**

(72) Inventors:
- **NEGISHI, Hidemitsu**
  **Tokyo 100-0011 (JP)**
- **YAMADA, Rei**
  **Tokyo 100-0011 (JP)**
- **TADA, Chikashi**
  **Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
**WO-A1-2007/091700** **JP-A- 2000 345 234**
**JP-A- 2002 339 014** **JP-A- 2014 148 737**
**JP-A- H0 987 730** **JP-A- H09 165 615**
**US-B1- 6 190 435**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 353 845 B1

## Description

### Technical Field

The present invention relates to a method of removing nitrogen, or a method of simultaneously removing nitrogen and sulfur, in molten steel charged in a reaction vessel, such as a ladle, by bringing the molten steel and slag added and formed on top of the molten steel into contact with each other, and further to a production method of steel smelted by these methods.

### Background Art

Nitrogen is a harmful component for metal materials, in a conventional steelmaking process, nitrogen [N] in molten iron is removed mainly by having it adsorbed onto the surfaces of air bubbles of carbon monoxide that is generated during a decarburization treatment of molten pig iron. Therefore, when it comes to molten steel with a low carbon concentration, due to the limited amount of carbon monoxide to be generated, a similar technique cannot remove nitrogen to a low concentration.

Meanwhile, to reduce $CO_2$ emissions, the steelmaking process needs to shift from a conventional method of using a blast furnace or a converter to a method of melting scrap or reduced iron. In that case, molten iron obtained has a low carbon concentration, which may make it impossible to smelt low-nitrogen steel for the above-described reason.

In this context, some methods of removing nitrogen from molten steel using slag have been proposed. For example, Patent Literature 1 shows a method in which an Al concentration in molten steel is held at a concentration of 0.7 mass% or higher in a VOD furnace for at least five minutes to form aluminum nitride (hereinafter "AlN") and thereby remove nitrogen.

Patent Literature 2 shows a method in which, after molten steel is produced in an electric furnace using iron scrap as a main iron source and then discharged into another refining vessel and held therein, a denitrification flux including an Al-containing substance is added, and while an oxygen-containing gas is blown onto the molten steel to form slag, the AlN is transferred into that slag to thereby remove nitrogen.

Patent Literature 3 shows a method in which molten metal is charged into a refining vessel having a gas top-blowing function, and after the surface of this molten metal is covered with slag composed mainly of CaO and $Al_2O_3$, an oxidizing gas is blown onto the surface of this covering slag to such an extent that this gas does not directly contact the molten metal to thereby remove nitrogen. Patent Literature US 6 190 435 B1 and JP 2000 345234 A further disclose alternative molten steel refining methods.

### Citation List

#### Patent Literature

Patent Literature 1: JP-H05-320733A
Patent Literature 2: JP-2007-211298A
Patent Literature 3: JP-H08-246024A

#### Non-Patent Literature

Non-Patent Literature 1: Tetsu-to-Hagane (Iron and Steel), 101 (2015), p. 74

### Summary of Invention

#### Technical Problem

However, these conventional technologies have the following problems.

The technologies described in Patent Literatures 1 and 2, which use the formation of AlN for denitrification, have a problem in that part of the AlN formed remains in the molten steel and constitutes a starting point of cracking during casting in a later step.

Moreover, smelting low-nitrogen steel with a nitrogen content in the order of a few tens of mass ppm by a denitrification method using the formation of AlN requires at least an Al concentration of about a few mass% to 10 mass% or an initial nitrogen concentration of about a few hundred mass ppm, with the solubility products of Al and N taken into account. The problem is that the technologies described in Patent Literatures 1 and 2 are extremely costly for smelting low-nitrogen steel in terms of process and therefore applicable only to those types of steel that have large amounts of dissolved nitrogen, such as stainless steel.

As conditions for shielding the molten steel from the oxidizing gas, the technology described in Patent Literature 3 presents the following:

(1) Securing at least 15 kg of slag per ton of molten steel; and
(2) Controlling the amount of slag, the amount of bottom-blown gas, the composition and the flow rate of the top-blown gas, the lance height, the atmospheric pressure, etc. within appropriate ranges.

However, as for condition (1), the amount of slag increases according to the size of the vessel into which molten steel is charged. As for condition (2), specific control means and control ranges are not described, and a method for checking whether the molten steel is shielded from the gas is not clear. Thus, compatible conditions are ambiguous. The present inventors have confirmed that when a test is conducted using the same ranges as those in the compatible example described in Patent Literature 3, the denitrification speed becomes actually slow as the movement of nitrogen between the slag and the metal is restricted as a result of an increase in apparent oxygen partial pressure in the slag-metal interface due to the oxidizing gas, which makes this technology not practical for operation.

In the case where the oxygen-containing gas is supplied without penetrating through the slag, the Al concentration does not decrease or decreases very gently in the oxygen blowing step. Therefore, to reduce the Al concentration in the steel, which has increased due to the metal-Al-containing substance, to a product specification level, for example, approximately 0.025 to 0.040 mass%, a step called Al elimination is separately required in which Al in the steel is removed through a reaction with an oxygen-containing gas penetrating through the slag phase. However, performing this causes an increase in the treatment time, which in turn causes a temporal mismatch with a casting time in a later step, thus contributing to reduced productivity.

While removing sulfur, other than nitrogen, in molten steel is also a role of secondary refining, Patent Literatures 1 to 3 do not particularly mention desulfurization. Thus, removing sulfur in molten steel requires separately providing a process such as forming slag mainly composed of CaO and $Al_2O_3$ while performing electrode heating in a ladle furnace (LF), for example, and removing sulfur while bringing the slag and the molten steel into contact with each other. This contributes to increased production costs.

The present invention has been devised in view of these circumstances, and an object thereof is to propose methods in which, when performing denitrification refining of molten steel using slag, a denitrification treatment that can remove high-concentration Al in the steel as well as allows an extremely low nitrogen concentration range to be stably and quickly reached is performed, or further this denitrification treatment and a desulfurization treatment are performed within a single treatment, such that denitrification, or denitrification and desulfurization, of the molten steel can be efficiently performed. The present invention further proposes a steel production method that uses molten steel smelted by these molten steel denitrification methods.

## Solution to Problem

As a result of conducting various experiments to solve the above-described problems, the present inventors have found that, in a denitrification treatment of removing nitrogen in molten steel through slag by blowing an oxygen-containing gas onto the slag, also under a condition where the oxygen-containing gas penetrates through the slag when performing Al elimination by causing the top-blown oxygen gas to reach the molten steel, there is a region where fast denitrification is facilitated, or further fast denitrification and desulfurization are simultaneously facilitated, depending on the molten steel temperature or the composition of the slag covering the molten steel other than a surface on which the oxygen-containing gas is blown (hereinafter, "hot spot"). The present invention has been devised based on this finding. The present invention is defined in the claims.

## Advantageous Effects of Invention

The present invention configured as described above makes it possible to remove high-concentration Al in the steel when performing denitrification refining of molten steel using slag, as well as to perform an efficient denitrification treatment of the molten steel by performing, within a single treatment, a desulfurization treatment in addition to a denitrification treatment that allows an extremely low nitrogen concentration range to be stably and quickly reached.

## Brief Description of Drawings

FIG. 1 is a schematic view showing one example of a device suitable for a method of the present invention.

FIG. 2 is a graph showing a relationship between an Al concentration in steel required to attain a reached nitrogen concentration of 25 mass ppm and a stirring power density.

FIG. 3 is a graph showing a relationship between C/A (-) that is a ratio between a CaO concentration and an $Al_2O_3$ concentration in slag and the reached nitrogen concentration.

FIG. 4 is a graph showing an influence of an MgO concentration in slag on the reached nitrogen concentration.

FIG. 5 is a graph showing an influence of the MgO concentration in slag on a molten steel temperature that was required to attain the same reached nitrogen.

FIG. 6 is a graph showing an influence of a furnace internal atmospheric pressure on an upper limit of variation in post-treatment nitrogen.

FIG. 7 is a graph showing a relationship between an equilibrated S concentration and C/A.

Description of Embodiments

Embodiments of the present invention will be specifically described below. The drawings are schematic and may differ from the reality. The following embodiments illustrate a device and a method for embodying the technical idea of the present invention, and are not intended to restrict the configuration to the one described below. Thus, various changes can be made to the technical idea of the present invention within the technical scope described in the claims.

<Configuration of Device for Implementing Present Invention>

FIG. 1 shows a device configuration suitable to implement the present invention. In FIG. 1, molten steel 3 is charged into a vessel 1, such as a ladle, that is lined with a refractory 2, and slag 4 containing CaO and $Al_2O_3$ is formed on top of this molten steel 3. In a state where a surface of the molten steel 3 or the slag 4 is subjected to a depressurized atmosphere inside a vacuum vessel 13 having an exhaust system 11 and an alloy addition system 12, an $O_2$-containing gas 7 is blown onto the slag 4 through a gas top-blowing lance 6 that is connected to a gas pipe 5 for supplying an oxygen gas and a gas pipe 9 for supplying an inert gas. The molten steel 3 is stirred as an inert gas 10 for stirring molten steel bath is blown in through a bottom-blowing nozzle 8 connected to the gas pipe 9.

Adding a metal-Al-containing substance for deoxidizing the molten steel 3 and for increasing the Al concentration in the molten steel 3, and adding a CaO-containing substance may be performed through the alloy addition system 12 or may be performed in a step before entering the vacuum vessel 13. To form the CaO-and-$Al_2O_3$-containing slag 4, the CaO-containing substance and $Al_2O_3$ resulting from deoxidation of the molten steel 3 are used, and this may be done using, as a CaO-and-$Al_2O_3$-containing substance, for example, calcium aluminate that is a pre-melted or pre-mixed product. The form of supplying the stirring inert gas 10 into the molten steel 3 may be, other than the above-described method, for example, a form of injecting it into the molten steel 3 through an injection lance for blowing in an inert gas.

Next, a molten steel denitrification method of the present invention, Preferred Examples 1 to 4 of the molten steel denitrification method of the present invention, and a molten steel simultaneous denitrification and desulfurization method of the present invention will be described in detail along with how they were developed.

<Characteristics of Molten Steel Denitrification Method of Present Invention>

Characteristics of the molten steel denitrification method of the present invention were found in the course of studying an amount of Al required to perform a denitrification treatment using slag other than at a hot spot under a condition where a top-blown oxygen-containing gas penetrates through a slag phase. A study was conducted on a minimum Al concentration required to reduce nitrogen in molten steel to 25 mass ppm in a case where, in a small-sized high-frequency vacuum induction melting furnace, 15 kg of molten steel was melted and a treatment of forming CaO-and-$Al_2O_3$-containing slag at a ratio of 15 kg/t or higher and blowing an oxygen-containing gas onto the slag was performed. As a result, it was found that the required Al concentration varied according to a stirring power density as shown in FIG. 2. It was also found that, in this case, the Al concentration in the molten steel decreased due to a reaction with oxygen when $L_s/L_{s0}$ (-) was one or higher. $L_s/L_{s0}$ is a ratio between a measurement result of a slag thickness $L_{s0}$ (m) at a stage where the CaO-and-$Al_2O_3$-containing slag has melted before a denitrification treatment and a depth $L_s$ (m) of a depression in the slag resulting when parameters in the formula described in Non-Patent Literature 1, namely the liquid density, the gas density, the jet speed, etc., are changed to values complying with experimental conditions. The present invention has been proposed based on this study.

As for the upper limit of the ratio $L_s/L_{s0}$ (-) between the slag thickness $L_{s0}$ (m) and the slag depression $L_s$ (m) in the above-described molten steel denitrification method of the present invention, there are different upper limits depending on the denitrification conditions, the device configuration, etc.; therefore, the upper limit is not particularly set here.

Preferred Example 1 of the molten steel denitrification method of the present invention was found in the course of studying an influence exerted on denitrification by the slag composition, mainly C/A (-) that is a ratio between a CaO concentration (mass%) and an $Al_2O_3$ concentration (mass%) in the slag. In a test in which, in the aforementioned small-sized melting furnace, an MgO concentration in slag was adjusted to 0% and C/A was varied from 0.4 to 2.0, as shown in FIG. 3, when C/A was within a range of 0.4 to 1.2, the denitrification performance remained on the same level, and after C/A exceeded 1.2, the denitrification performance started to decrease. When 1.6 was exceeded, reached nitrogen rose sharply, and when 1.8 was exceeded, a low nitrogen concentration range (where the nitrogen concentration is 35 mass ppm or lower) was no longer reached. Aforementioned Preferred Example 1 has been proposed based on this study.

Preferred Example 2 of the molten steel denitrification method of the present invention was found while an influence of an MgO concentration in slag was studied. In the aforementioned small-sized melting furnace, a denitrification treatment was performed with a stirring power density held constant at 500 W/t and the MgO concentration controlled within a range of 0% to 17%. As a result, as shown in FIG. 4, when the MgO concentration in the slag was at a level of 5 mass% or lower, the low nitrogen concentration range (where the nitrogen concentration is 35 mass ppm or lower) was reached, but the denitrification performance was significantly reduced at higher concentrations. Aforementioned Preferred Example 2 has been proposed based on this study.

Preferred Example 3 of the molten steel denitrification method of the present invention was found in the course of exploring a remedy for reduced denitrification in the case where the MgO concentration had to be increased from the viewpoint of protecting the refractory of the vessel into which molten steel was charged. Using the aforementioned small-sized high-frequency vacuum induction melting furnace, a study was conducted on a molten steel temperature required to reduce nitrogen in molten steel to 25 mass ppm when the MgO concentration in CaO-and-$Al_2O_3$-containing slag was changed within a range from 0 mass% to a saturated concentration. As a result, as shown in FIG. 5, the molten steel temperature needed to be increased by about 5°C as the MgO concentration in the slag increased by 1.0 mass%. This study has quantitatively revealed the amount of increase in the molten steel temperature that can recover a decrease in denitrification due to an increase in the MgO concentration. Aforementioned Preferred Example 3 has been proposed based on this study.

Preferred Example 4 of the molten steel denitrification method of the present invention was found in the course of studying an influence of an atmospheric pressure on denitrification behavior. Using the aforementioned small-sized high-frequency vacuum melting furnace, after the atmospheric pressure inside the furnace was adjusted, a denitrification treatment of molten steel was performed while the molten steel was given a stir at a stirring power density of 200 W/t to 2000 W/t. First, in a test in which the degree of vacuum was controlled, as shown in FIG. 6, the upper limit value of variation in the post-treatment nitrogen concentration varied according to the stirring power density. It was found that when the stirring power density was low, the reached nitrogen concentration stabilized at $1.0 \times 10^5$ Pa, but that when the stirring power density was high, the reached nitrogen concentration started to increase at over $0.66 \times 10^5$ Pa, with the upper limit value of the variation in the post-treatment reached nitrogen concentration becoming larger as the stirring power density became higher. In the present invention, therefore, a desirable atmospheric pressure is specified as the barometric pressure ($1.0 \times 10^5$ Pa) or lower, and is further preferably $0.66 \times 10^5$ Pa or lower. A possible explanation for this result is that stirring of the molten steel bath exposes part of the surface of the molten steel, through which nitrogen is absorbed. Aforementioned Preferred Example 4 has been proposed based on this study.

<Characteristics of Molten Steel Simultaneous Denitrification and Desulfurization Method of Present Invention>

While an influence of C/A of slag on denitrification was studied, it was found that desulfurization also progressed depending on the conditions, which prompted a study on conditions under which denitrification and desulfurization could progress at the same time. This is how the molten steel simultaneous denitrification and desulfurization method of the present invention was found. Using the aforementioned small-sized high-frequency vacuum melting furnace, an oxygen gas was blown onto slag, with $L_s/L_{s0}$ set to 1, inside the melting furnace depressurized to $0.66 \times 10^5$ Pa. The molten steel was given a stir at a constant power density of 200 W/t. During the test, oxygen activity was measured, and the amount of $Al_2O_3$ generated from an Al concentration that equilibrated with that oxygen activity was calculated. C/A was maintained at 0.4 to 2.0 while lime powder was added so as not to change C/A. Under these conditions, both denitrification and desulfurization behaviors were studied. The Al concentration in the molten steel before this treatment was performed was 0.3%; the molten steel temperature was constant at 1650°C; the nitrogen concentration and the sulfur concentration in the molten steel were 50 mass ppm and 0.03%, respectively; the MgO concentration in the slag was 0%; and the slag unit consumption was 15 kg/t.

As a result, it was found that, as shown in FIG. 7, an equilibrated sulfur concentration recognizable from the desulfurization behavior decreased each time C/A increased from 0.4, and that the equilibrated sulfur concentration reached a minimum value at C/A of 1.7 and conversely increased when C/A became higher than 1.7. The desulfurization speed is determined by Formula (2) below, and is determined with the difference between the current sulfur concentration and the equilibrated sulfur concentration as a driving force. Therefore, an increase in the equilibrated sulfur concentration means a decrease in the desulfurization speed:

$$-d\,[\%S]\,/\,dt = k \cdot ([\%S] - [\%S]_e) \cdots (2)$$

where [%S] represents the sulfur concentration in the steel; $[\%S]_e$ represents the equilibrated sulfur concentration; k represents a proportional constant; and t represents time.

As shown in FIG. 3, when C/A is not higher than 1.8, the nitrogen concentration reaches a low nitrogen concentration range (where the nitrogen concentration in the steel is 35 mass ppm or lower). Thus, it can be seen that increasing C/A to 1.7 or higher at which the desulfurization speed becomes highest within a range of C/A in which denitrification progresses makes little sense from the viewpoint of simultaneous denitrification and desulfurization.

On the other hand, when C/A is within a range of 0.4 to 1.2, from FIG. 7, the equilibrated reached sulfur concentration decreases monotonically, which makes it desirable to increase C/A from the viewpoint of desulfurization. However, from FIG. 3, reached nitrogen increases slightly (from reached nitrogen of 15 mass ppm to 16 mass ppm) when C/A is 0.7 or higher, which makes it desirable to reduce C/A from the viewpoint of denitrification. Therefore, the lower limit of C/A in performing simultaneous denitrification and desulfurization is preferably 0.7 or higher. The molten steel simultaneous denitrification and desulfurization method of the present invention has been proposed as a result of this study.

<Characteristics of Steel Production Method of Present Invention>

It is preferable that molten steel smelted by the above-described molten steel denitrification method or the above-described molten steel simultaneous denitrification and desulfurization method be cast after it is otherwise adjusted to a predetermined composition and form control and floating separation of inclusions are performed as necessary. It is possible to produce high-grade steel which is low-nitrogen steel and of which various components have been adjusted.

Examples

In the following, examples of the present invention will be described in detail. Using a device having the configuration of FIG. 1, metal Al was added to molten steel at 1650°C or higher inside a ladle to adjust the Al concentration in the molten steel to 0.12 to 0.15 mass%. CaO and refractory-protecting MgO were added to form CaO-$Al_2O_3$ binary slag or CaO-$Al_2O_3$-MgO ternary slag, and then an Ar gas was supplied at a stirring power density of 500 kW/t. The test was performed using an amount of molten steel of 160 t. The pre-treatment nitrogen concentration and the pre-treatment sulfur concentration of a denitrification treatment or a simultaneous denitrification-desulfurization treatment were adjusted to 50 mass ppm and 300 mass ppm, respectively. Table 1 below shows the test result.

[Table 1]

| | $L_s/L_{s0}$ | Stirring power density | Al concentration in steel | C/A | MgO concentration in slag | Molten steel temperature | Atmospheric pressure | Slag amount | Pre-treatment N | Pre-treatment S | Minimum Al concentration during treatment | Final Al | Post-treatment N | Post-treatment S | Desulfurization speed | Treatment time |
|---|---|---|---|---|---|---|---|---|---|---|---|---|---|---|---|---|
| | - | w/t | mass% | - | mass% | °C | $\times 10^5$Pa | kg/t | mass ppm | mass ppm | mass% | mass% | mass ppm | mass ppm | ppm/min | min |
| Invention Example 1 | 1.05 | 500 | 0.15 | 1.9 | 10 | 1650 | 1.0 | 15 | 50 | 300 | 0.04 | 0.04 | 35 | | 7.50 | 40 |
| Invention Example 2 | 1.05 | 500 | 0.15 | 1.8 | 10 | 1650 | 1.0 | 15 | 50 | 300 | 0.04 | 0.04 | 34 | 31 | 6.73 | 40 |
| Invention Example 3 | 1.05 | 500 | 0.15 | 0.4 | 10 | 1650 | 1.0 | 15 | 50 | 300 | 0.04 | 0.04 | 30 | 244 | 1.85 | 30 |
| Invention Example 4 | 1.05 | 500 | 0.15 | 0.4 | 5 | 1650 | 1.0 | 15 | 50 | 300 | 0.04 | 0.04 | 25 | 244 | 1.85 | 30 |
| Invention Example 5 | 1.05 | 500 | 0.15 | 0.4 | 10 | 1676 | 1.0 | 15 | 50 | 300 | 0.04 | 0.04 | 25 | 244 | 1.85 | 30 |
| Invention Example 6 | 1.05 | 500 | 0.15 | 0.4 | 5 | 1650 | 0.27 | 15 | 50 | 300 | 0.04 | 0.04 | 15 | 244 | 1.85 | 30 |
| Invention Example 7 | 1.05 | 500 | 0.15 | 0.4 | 10 | 1676 | 0.27 | 15 | 50 | 300 | 0.04 | 0.04 | 15 | 244 | 1.85 | 30 |
| Invention Example 8 | 1.05 | 500 | 0.15 | 1.7 | 5 | 1650 | 0.27 | 15 | 50 | 300 | 0.05 | 0.04 | 20 | 26 | 9.15 | 30 |
| Invention Example 9 | 1.05 | 500 | 0.15 | 1.7 | 10 | 1676 | 0.27 | 15 | 50 | 300 | 0.05 | 0.04 | 20 | 26 | 9.15 | 30 |
| Invention Example 10 | 1 | 500 | 0.15 | 0.7 | 5 | 1650 | 0.27 | 30 | 50 | 300 | 0.08 | 0.04 | 17 | 28 | 7.77 | 35 |
| Comparative Example 1 | 0.9 | 500 | 0.12 | 1.9 | 10 | 1650 | 1.0 | 15 | 50 | 300 | 0.12 | 0.035 | 48 | 32 | 6.70 | 40 |

From the result in Table 1, it can be seen that Examples of Invention 1 to 10 in which the stirring power density and the Al concentration in the steel of Formula (1) are met as well as $L_s/L_{s0} \geq 1$ is met can perform an effective denitrification treatment, with post-treatment N being 35 mass ppm or lower, compared with Comparative Example 1 in which $L_s/L_{s0}$ is lower than 1.

It can be seen from the result in Table 1 that, compared with Example of Invention 1 in which C/A exceeds 1.8, Examples of Invention 2 to 10 in which C/A is between 0.4 and 1.8, both inclusive, are preferable in that post-treatment N is favorable (Preferred Example 1). Further, it can be seen from the result in Table 1 that, compared with Examples of Invention 1 to 3 in which the MgO concentration in the slag exceeds 5.0 mass%, Example of Invention 4, Example of Invention 6, Example of Invention 8, and Example of Invention 10 in which the MgO concentration is 5.0 mass % or lower are preferable in that post-treatment N is favorable (Preferred Example 2). Moreover, it can be seen from the result in Table 1 that Example of Invention 5, Example of Invention 7, and Example of Invention 9 in which, even though the MgO concentration in the slag exceeded 5.0 mass%, the molten steel temperature was increased by 5°C or more each time the MgO concentration increased by 1% are preferable in that post-treatment N equivalent to that of Example of Invention 4, Example of Invention 6, and Example of Invention 8 in which the MgO concentration was 5 mass% is attained (Preferred Example 3). In addition, it can be seen from the result of Table 1 that, compared with Examples of Invention 1 to 5 in which the pressure on the surface of the slag or the molten steel exceeded $1.0 \times 10^5$ Pa, Examples of Invention 6 to 10 in which the pressure was reduced to $1.0 \times 10^5$ Pa or lower are preferable in that post-treatment N is favorable (Preferred Example 4).

Furthermore, it can be seen from the result in Table 1 that Examples of Invention 8 to 10 in which the Al concentration in the molten steel being 0.05 mass% or higher is met as well as C/A being between 0.7 and 1.7, both inclusive, is met, compared with Examples of Invention 1 to 7 and Comparative Example 1 in which C/A is outside this range, can appropriately perform a simultaneous denitrification and desulfurization treatment, with both the post-treatment sulfur concentration and the post-treatment nitrogen concentration favorable at 35 mass ppm or lower and 25 mass ppm or lower, respectively.

Industrial Applicability

When applied to a steelmaking process of producing molten steel by melting low-carbon scrap or reduced iron in an electric furnace etc., the molten steel denitrification method according to the present invention can stably mass-produce low-nitrogen steel. Thus, this method contributes to reducing $CO_2$ and is industrially useful.

1 Vessel
2 Refractory
3 Molten steel
4 slag
5 Gas pipe (oxygen gas)
6 Gas top-blowing lance
7 $O_2$-containing gas
8 Bottom-blowing nozzle
9 Gas pipe (inert gas)
10 Inert gas for stirring molten steel bath
11 Exhaust system
12 Alloy addition system
13 Vacuum vessel

## Claims

**1.** A molten steel denitrification method that is a molten steel denitrification treatment in which CaO-and-$Al_2O_3$-containing slag is formed on top of molten steel charged in a vessel and an oxygen-containing gas is blown from above the slag, while the slag and the molten steel are brought into contact with each other to remove nitrogen in the molten steel, wherein the molten steel is stirred by blowing an inert gas thereinto,
**characterized in that**
an Al concentration in the molten steel is kept at or higher than a value determined by Formula (1) according to a stirring power density, and that the oxygen-containing gas is blown such that a ratio between a thickness $L_{s0}$ of the slag and a depth $L_s$ of a depression in the slag resulting from blowing of the oxygen-containing gas meets $L_s/L_{s0} \geq 1$:

$$\text{Al concentration (mass\%) in molten steel} = -0.072 \times \ln(\text{stirring power density (W/t)}) + 0.5822 \quad (1)$$

2. The molten steel denitrification method according to claim 1, wherein C/A (-) that is a ratio between a CaO concentration (mass%) and an $Al_2O_3$ concentration (mass%) in the slag is adjusted to between 0.4 and 1.8, both inclusive.

3. The molten steel denitrification method according to claim 1 or 2, wherein an MgO concentration in the slag is adjusted to 5.0 mass% or lower.

4. The molten steel denitrification method according to claim 1 or 2, wherein a temperature of the molten steel is increased by 5°C or more each time an MgO concentration in the slag increases by 1% beyond 5.0 mass%.

5. The molten steel denitrification method according to any one of claims 1 to 4, wherein a surface of the slag or the molten steel is depressurized to $1.0 \times 10^5$ Pa or lower.

6. A molten steel simultaneous denitrification and desulfurization method in which CaO-and-$Al_2O_3$-containing slag is formed on top of molten steel charged in a vessel and an oxygen-containing gas is blown from above the slag, while the slag and the molten steel are brought into contact with each other to remove nitrogen and sulfur in the molten steel, **characterized in that**,
during the denitrification treatment according to any one of claims 1 to 5, C/A (-) that is a ratio between a CaO concentration (mass%) and an $Al_2O_3$ concentration (mass%) in the slag is controlled to between 0.7 and 1.7, both inclusive, while an Al concentration in the molten steel is kept at 0.05 mass% or higher.

7. A steel production method **characterized in that** molten steel smelted by the molten steel denitrification method according to any one of claims 1 to 5 or the molten steel simultaneous denitrification and desulfurization method according to claim 6 is cast after components are arbitrarily adjusted.

**Patentansprüche**

1. Verfahren zur Entstickung einer Stahlschmelze, das eine Entstickungsbehandlung einer Stahlschmelze ist, in der CaO- und $Al_2O_3$-haltige Schlacke auf eine in ein Gefäß eingefüllte Stahlschmelze gebildet wird und ein sauerstoffhaltiges Gas von oberhalb der Schlacke eingeblasen wird, während die Schlacke und die Stahlschmelze miteinander in Kontakt gebracht werden, um Stickstoff in der Stahlschmelze zu entfernen, wobei die Stahlschmelze durch Einblasen eines Inertgases gerührt wird,
**dadurch gekennzeichnet, dass**
eine Al-Konzentration in der Stahlschmelze auf oder über einen durch Formel (1) bestimmten Wert entsprechend einer Rührleistungsdichte gehalten wird, und dass das sauerstoffhaltige Gas so eingeblasen wird, dass ein Verhältnis zwischen einer Dicke $L_{s0}$ der Schlacke und einer Tiefe $L_s$ einer Vertiefung der Schlacke, die aus dem Einblasen des sauerstoffhaltigen Gases resultiert, $L_s/L_{s0} \geq 1$ erfüllt:

$$\text{Al-Konzentration (Masse-\%) in Stahlschmelze} = -0{,}072 \times \ln(\text{Rührleistungsdichte (W/t)}) + 0{,}5822 \quad (1)$$

2. Verfahren zur Entstickung einer Stahlschmelze gemäß Anspruch 1, wobei C/A(-), das ein Verhältnis zwischen einer CaO-Konzentration (Masse-%) und einer $Al_2O_3$-Konzentration (Masse-%) in der Schlacke ist, zwischen 0,4 und 1,8 jeweils einschließlich eingestellt wird.

3. Verfahren zur Entstickung einer Stahlschmelze gemäß Anspruch 1 oder 2, wobei eine MgO-Konzentration in der Schlacke auf 5,0 Masse-% oder niedriger eingestellt wird.

4. Verfahren zur Entstickung einer Stahlschmelze gemäß Anspruch 1 oder 2, wobei eine Temperatur der Stahlschmelze jedes Mal, wenn eine MgO-Konzentration in der Schlacke um 1 % über 5,0 Masse-% ansteigt, um 5°C oder mehr erhöht wird.

5. Verfahren zur Entstickung einer Stahlschmelze gemäß einem der Ansprüche 1 bis 4, wobei der Druck einer Oberfläche der Schlacke oder der Stahlschmelze auf $1{,}0 \times 10^5$ Pa oder niedriger herabgesetzt wird.

6. Verfahren zur gleichzeitigen Entstickung und Entschwefelung einer Stahlschmelze, in dem eine CaO- und $Al_2O_3$-haltige Schlacke auf eine in ein Gefäß eingefüllte Stahlschmelze gebildet wird und ein sauerstoffhaltiges Gas von oberhalb der Schlacke eingeblasen wird, während die Schlacke und die Stahlschmelze miteinander in Kontakt gebracht werden, um Stickstoff und Schwefel in der Stahlschmelze zu entfernen,
**dadurch gekennzeichnet, dass**
während der Entstickungsbehandlung gemäß einem der Ansprüche 1 bis 5 C/A(-), das ein Verhältnis zwischen einer CaO-Konzentration (Masse-%) und einer $Al_2O_3$-Konzentration (Masse-% in der Schlacke ist, zwischen 0,7 und 1,7 jeweils einschließlich geregelt wird, während eine Al-Konzentration in der Stahlschmelze bei 0,05 Masse-% oder höher gehalten wird.

7. Stahlherstellungsverfahren, **dadurch gekennzeichnet, dass** eine Stahlschmelze, die durch das Verfahren zur Entstickung einer Stahlschmelze gemäß einem der Ansprüche 1 bis 5 oder durch das Verfahren zur gleichzeitigen Entstickung und Entschwefelung einer Stahlschmelze gemäß Anspruch 6 geschmolzen wurde, gegossen wird, nachdem die Komponenten eingestellt wurden.

## Revendications

1. **Procédé** de dénitrification d'acier fondu qui est un traitement de dénitrification d'acier fondu dans lequel du CaO et du $Al_2O_3$ contenant du laitier est formé sur le dessus d'acier fondu chargé dans une cuve et un gaz contenant de l'oxygène est soufflé au-dessus du laitier, tandis que le laitier et l'acier fondu sont mis en contact l'un avec l'autre pour éliminer l'azote dans l'acier fondu, dans lequel l'acier fondu est brassé en y insufflant un gaz inerte,
**caractérisé en ce que**
une concentration en Al dans l'acier fondu est maintenue à une valeur ou au-dessus d'une valeur déterminée par la Formule (1) en fonction d'une densité de puissance de brassage, et **en ce que** le gaz contenant de l'oxygène est soufflé de sorte qu'un rapport entre une épaisseur $L_{s0}$ du laitier et une profondeur $L_s$ d'une dépression dans le laitier résultant d'un soufflage du gaz contenant de l'oxygène satisfait $L_s/L_{s0} \geq 1$ :

concentration en Al (en % en masse) dans l'acier fondu = -0,072× ln (densité de puissance de brassage (W/t)) + 0,5822 (1)

2. Procédé de dénitrification d'acier fondu selon la revendication 1, dans lequel C/A (-) qui est un rapport entre une concentration en CaO (% en masse) et une concentration en $Al_2O_3$(% en masse) dans le laitier est ajusté entre 0,4 et 1,8, les deux valeurs étant incluses.

3. Procédé de dénitrification d'acier fondu selon la revendication 1 ou 2, dans lequel une concentration en MgO dans le laitier est ajusté à 5,0 en % en masse ou moins.

4. Procédé de dénitrification d'acier fondu selon la revendication 1 ou 2, dans lequel une température de l'acier fondu est augmentée de 5°C ou plus chaque fois qu'une concentration en MgO dans le laitier augmente de 1 % au-delà de 5,0 % en masse.

5. **Procédé** de dénitrification d'acier fondu selon l'une quelconque des revendications 1 à 4, dans lequel une surface du laitier ou de l'acier fondu est dépressurisée à $1,0 \times 10^5$ Pa ou moins.

6. Procédé de dénitrification et de désulfuration simultanées d'acier fondu dans lequel du CaO et du $Al_2O_3$ contenant du laitier est formé sur le dessus d'acier fondu chargé dans une cuve et un gaz contenant de l'oxygène est soufflé au-dessus du laitier, tandis que le laitier et l'acier fondu sont mis en contact l'un avec l'autre pour éliminer l'azote et le soufre dans l'acier fondu,
**caractérisé en ce que**,
pendant le traitement de dénitrification selon l'une quelconque des revendications 1 à 5, C/A (-) qui est un rapport entre une concentration en CaO (% en masse) et une concentration en $Al_2O_3$(% en masse) dans le laitier est contrôlé pour être entre 0,7 et 1,7, les deux valeurs étant incluses, tandis qu'une concentration en Al dans l'acier fondu est maintenue à 0,05 % en masse ou plus.

7. Procédé de production d'acier **caractérisé en ce que** de l'acier fondu qui a été fondu par le procédé de dénitrification d'acier fondu selon l'une quelconque des revendications 1 à 5 ou le procédé de dénitrification et de désulfuration simultanées d'acier fondu selon la revendication 6 est coulé après que les composants ont été ajustés arbitrairement.

FIG. 1

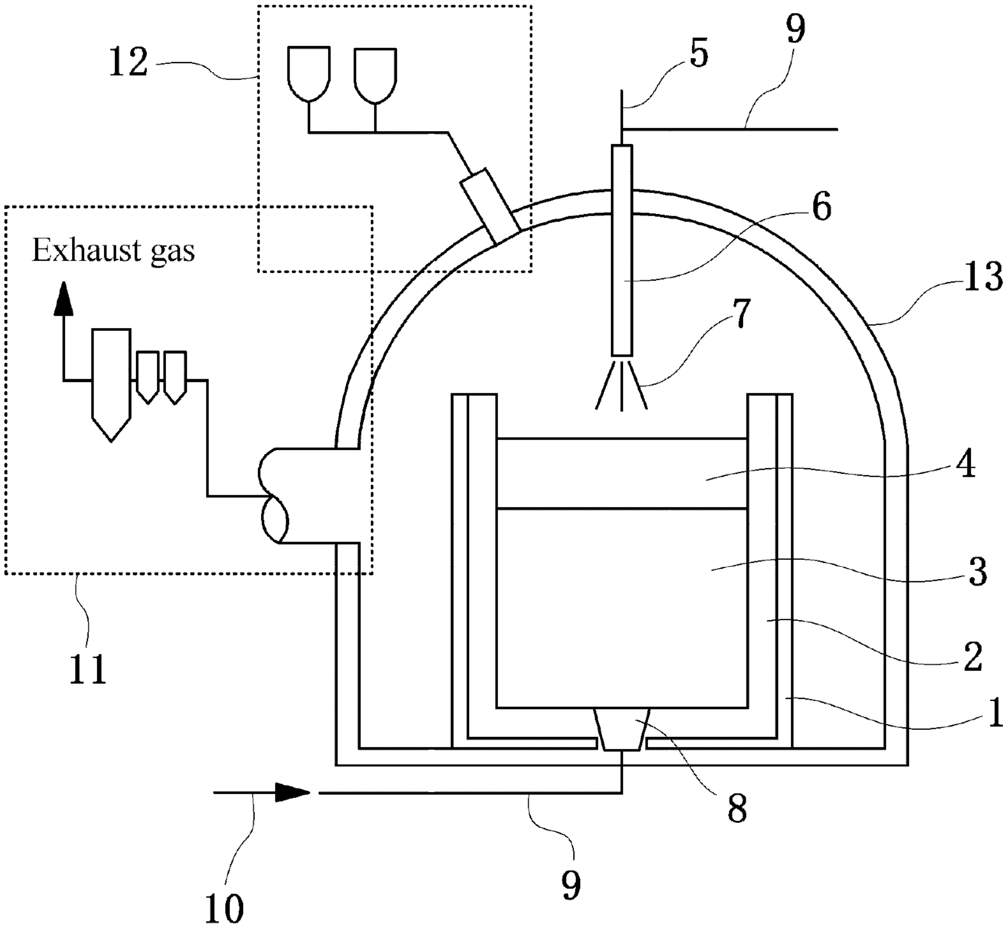

FIG. 2

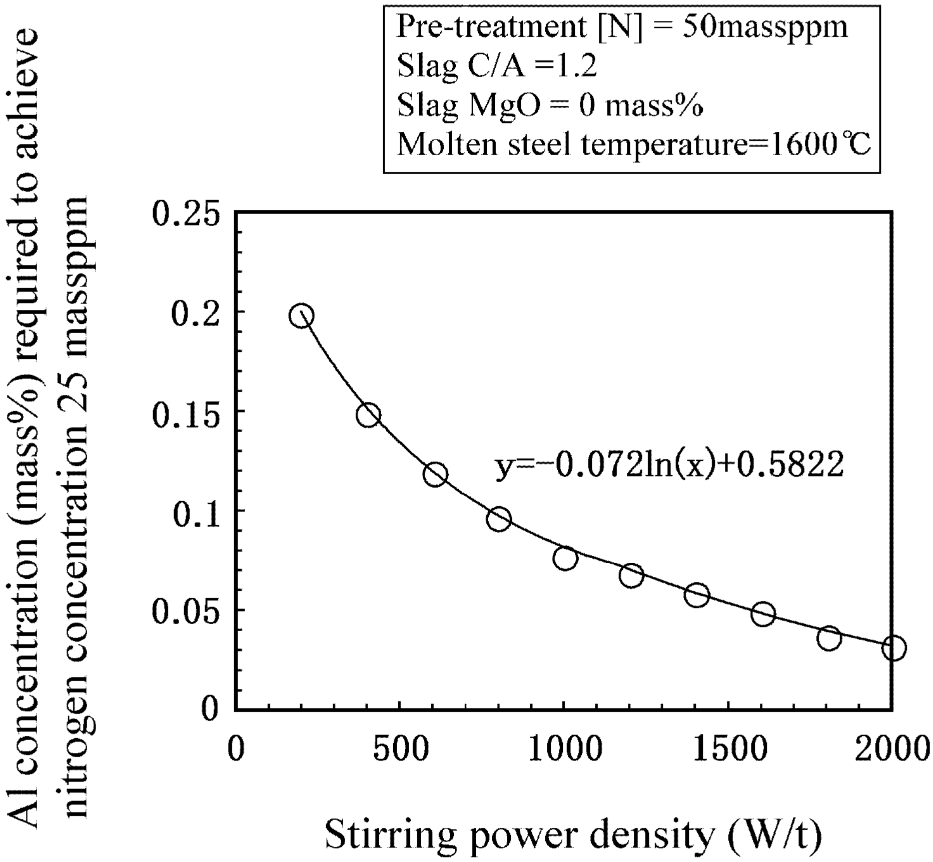
Pre-treatment [N] = 50massppm
Slag C/A =1.2
Slag MgO = 0 mass%
Molten steel temperature=1600℃
Al concentration (mass%) required to achieve nitrogen concentration 25 massppm
0.25
0.2
0.15
0.1
0.05
0
y=−0.072ln(x)+0.5822
0
500
1000
1500
2000
Stirring power density (W/t)

FIG. 3

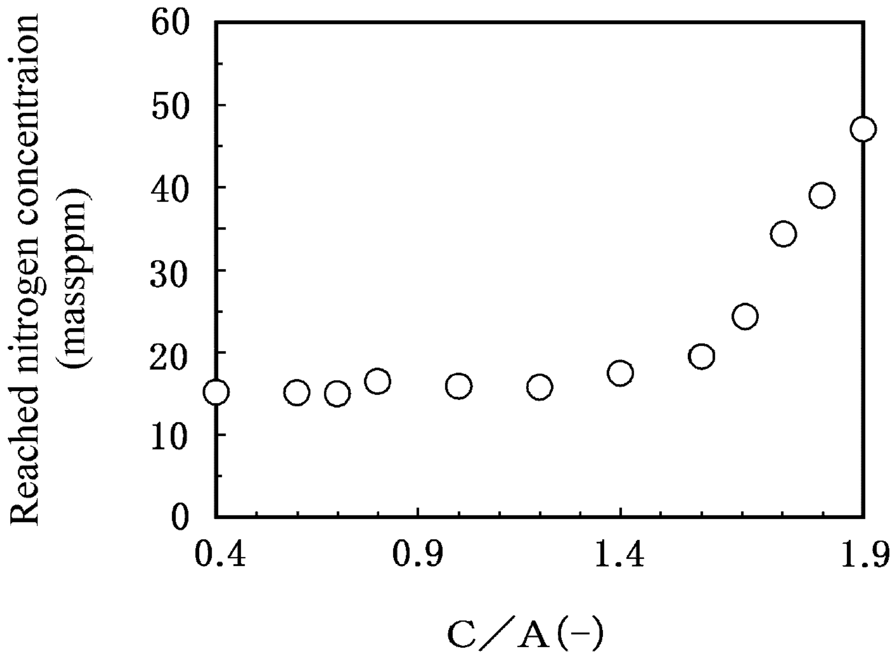
Reached nitrogen concentraion (massppm)
60
50
40
30
20
10
0
0.4
0.9
1.4
1.9
C／A(−)

FIG. 4

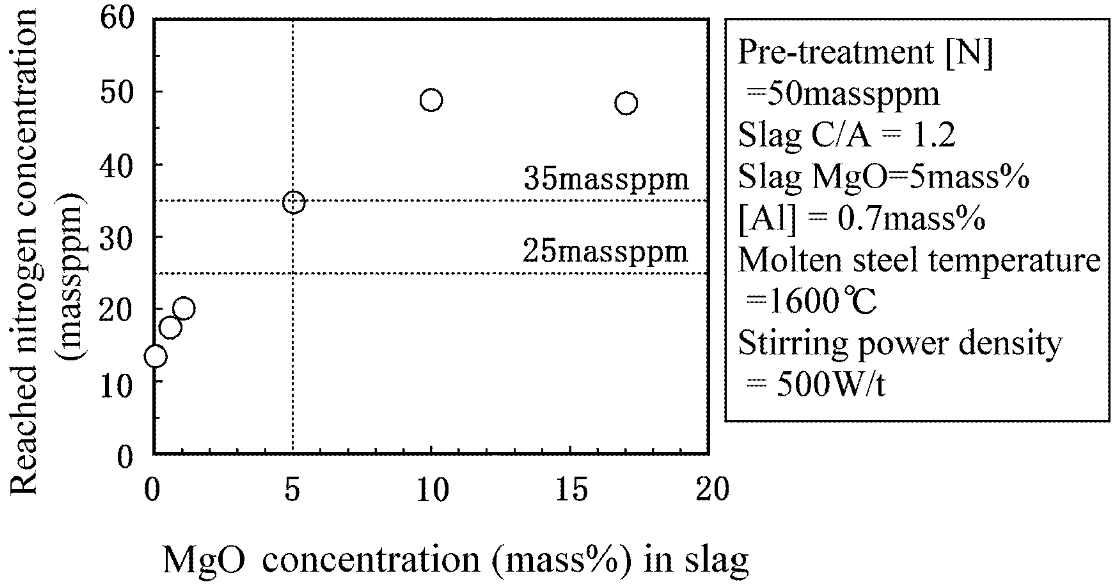
Reached nitrogen concentration (massppm)
60
50
40
30
20
10
0
0
5
10
15
20
MgO concentration (mass%) in slag
35massppm
25massppm
Pre-treatment [N] =50massppm
Slag C/A = 1.2
Slag MgO=5mass%
[Al] = 0.7mass%
Molten steel temperature =1600℃
Stirring power density = 500W/t

FIG. 5

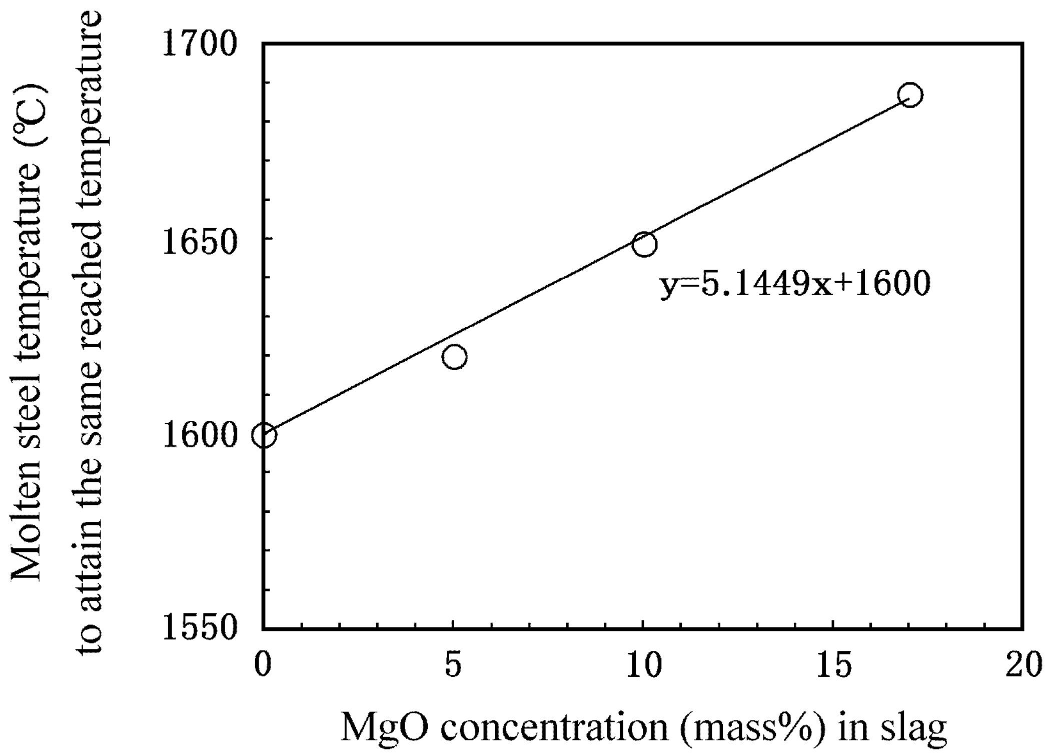
Molten steel temperature (℃) to attain the same reached temperature
1700
1650
1600
1550
0
5
10
15
20
MgO concentration (mass%) in slag
y=5.1449x+1600

FIG. 6

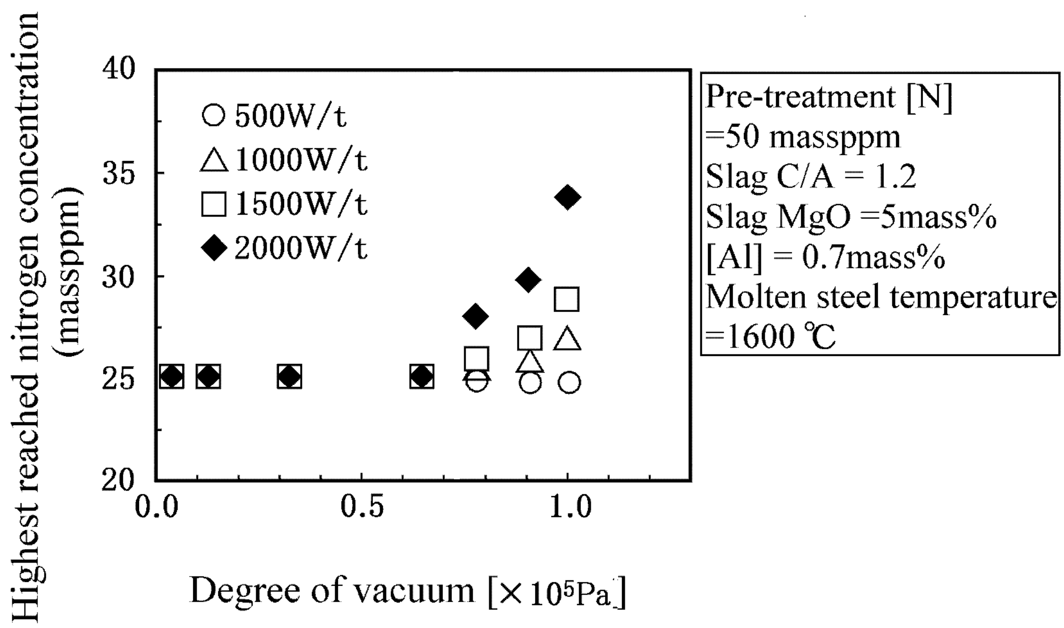
Highest reached nitrogen concentration (massppm)
40
35
30
25
20
0.0
0.5
1.0
Degree of vacuum [×10⁵Pa]
○ 500W/t
△ 1000W/t
□ 1500W/t
◆ 2000W/t
Pre-treatment [N] =50 massppm
Slag C/A = 1.2
Slag MgO =5mass%
[Al] = 0.7mass%
Molten steel temperature =1600 ℃

FIG. 7

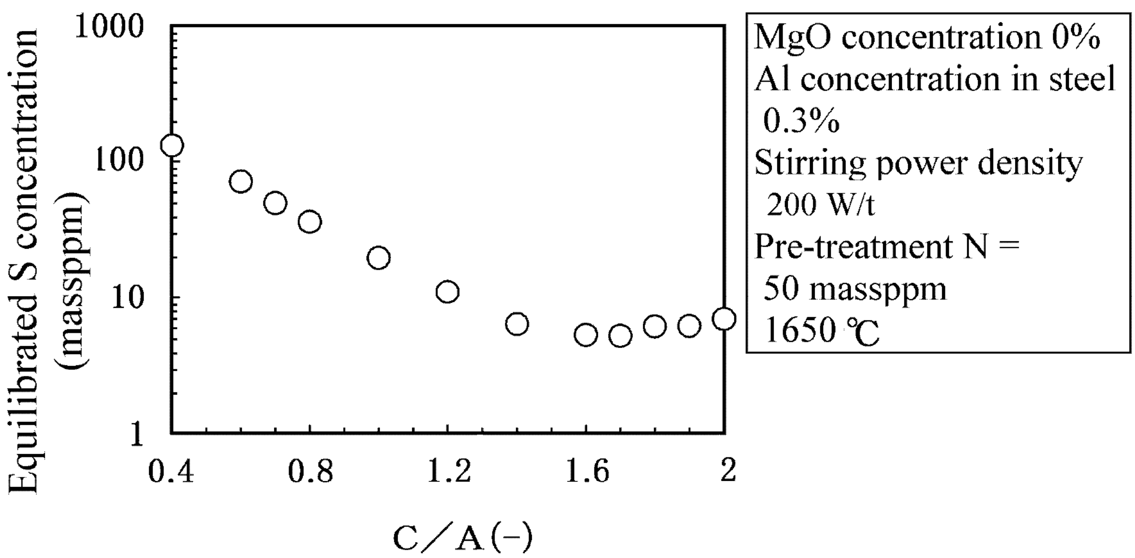
Equilibrated S concentration (massppm)
1000
100
10
1
0.4
0.8
1.2
1.6
2
C／A(−)
MgO concentration 0%
Al concentration in steel 0.3%
Stirring power density 200 W/t
Pre-treatment N = 50 massppm
1650 ℃

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- US 6190435 B1
- JP 2000345234 A
- JP H05320733 A
- JP 2007211298 A
- JP H08246024 A

### Non-patent literature cited in the description

- *Tetsu-to-Hagane (Iron and Steel)*, 2015, vol. 101, 74